# FASCICULE DE BREVET EUROPEEN

(11) **EP 3 606 670 B1**
(45) Date de publication et mention de la délivrance du brevet: **28.04.2021**
(21) Numéro de dépôt: 18720522.4
(22) Date de dépôt: 29.03.2018
(51) Int. Cl.: B01L 3/00, G05D 16/20

(54) **DISPOSITIF MICROFLUIDIQUE**
MIKROFLUIDISCHE VORRICHTUNG
MICROFLUIDIC DEVICE

(30) Priorité: 03.04.2017 FR 1752867
(43) Date de publication de la demande: 12.02.2020
(73) Titulaire: Fluigent, 94270 Le Kremlin-Bicêtre (FR)
(72) Inventeur: VERGNE, Clémence, 75010 Paris (FR); ROUFFET, Benjamin, 77400 Lagny-sur-Marne (FR); MATTHYS, Lionel, 94800 Villejuif (FR); BRETON, Robert, 75013 Paris (FR); PETIT, Nicolas, 92330 Sceaux (FR)
(74) Mandataire: Osha Liang
(86) Numéro de dépôt international: PCT/EP2018/058063
(87) Numéro de publication internationale: WO 2018/184971

(56) Documents cités:
- JP-A- H04 145 508
- JP-A- 2000 205 204
- JP-A- 2009 265 859
- US-A- 3 038 449
- US-A- 5 329 965
- Fluigent Sa: "Flow-Rate Control Module (FRCM)", , 28 septembre 2016 (2016-09-28), XP055434466, Extrait de l'Internet: URL:http://www.fluigent.com/wp-content/upl oads/2017/03/flyer_Flow-Rate-Control-Modul e.pdf [extrait le 2017-12-12]

## Description

### DOMAINE TECHNIQUE

Le présent exposé concerne un dispositif microfluidique.

Un tel dispositif peut être utilisé dans des domaines technologiques tels que celui de l'analyse de molécules ou de macromolécules biologiques, les biotechnologies, les applications médicales, la synthèse chimique ou la microélectronique.

### ARRIERE PLAN

Dans les domaines technologiques précités, il est nécessaire de pouvoir manipuler et analyser des échantillons de produit dont le volume est de l'ordre du microlitre ou plus faible encore. Les dispositifs dits "microfluidiques" permettent de travailler sur des échantillons précieux et de petit volume, de diminuer les quantités de consommables (véhicules, marqueurs, etc.) employées, d'accélérer les échanges de matière ou de chaleur et de réduire les temps de transport. Ces dispositifs comportent généralement des microcanaux dans lesquels peuvent s'effectuer de façon automatisée différentes opérations sur un échantillon.

A titre d'exemple, un dispositif de diagnostic microfluidique permet, sur un échantillon tel qu'une goutte de sang distribuée dans des microcanaux, d'effectuer un prétraitement de l'échantillon (par exemple une lyse cellulaire ou une extraction d'ADN ou de protéine), éventuellement un enrichissement ou une séparation (chromatographie, électrophorèse), suivi par la détection de molécules prédéterminées à l'aide de techniques de type optique (e.g. fluorescence, luminescence, résonance plasmon), électrique ou électrochimique (e.g. conductivité, ampérométrie cyclique), ou électronique (e.g. transistors à effet de champ, biocapteurs, microlames vibrantes).

Des applications, telles que l'analyse d'ADN, le tri cellulaire, la synthèse de composés chimiques, la purification ou l'enrichissement d'un produit en une ou plusieurs espèces, des actions de transport de chaleur pour le refroidissement ou le chauffage d'un composant, des réactions d'amplification d'acides nucléiques, sont possibles avec de tels dispositifs microfluidiques.

Des exemples de dispositifs microfluidiques sont décrits dans le document de brevet FR 2855076. Un de ces exemples, représenté sur la figure 1 du document, comprend un microcanal relié à un réservoir par l'intermédiaire d'un conduit. Le réservoir est une enceinte contenant un produit liquide à distribuer dans le microcanal. Un circuit de gaz traverse le réservoir. Ce circuit comprend, de l'amont vers l'aval dans le sens de circulation du gaz, une source de pression (e.g. une pompe ou une bouteille de gaz comprimé), une branche d'entrée raccordée à la source de pression, le réservoir et une branche de sortie. Une électrovanne proportionnelle est disposée dans la branche d'entrée afin de réguler le débit de gaz provenant de la source de pression et allant dans le réservoir. Une vanne à pointeau est disposée dans la branche de sortie afin de contrôler le débit de gaz quittant le réservoir. En réglant l'ouverture des vannes, il est possible d'établir un écoulement de gaz contrôlé dans le réservoir. En particulier, l'électrovanne est reliée à un système de régulation permettant de contrôler l'ouverture de celle-ci en fonction d'une information de pression délivrée par un capteur de pression mesurant la pression du gaz dans le réservoir. Il est ainsi possible de contrôler de manière dynamique la pression du gaz dans le réservoir et de contrôler le débit du produit dans le microcanal, ce débit dépendant de la pression exercée dans le réservoir par le gaz sur le produit.

Bien qu'étant globalement satisfaisant, un tel dispositif présente certains inconvénients. En particulier, il peut être difficile de trouver un bon compromis entre une bonne dynamique de réponse en pression, une bonne stabilité en pression, une faible consommation en air (< 1L/min) et une faible consommation électrique. La dynamique de réponse en pression correspond au temps nécessaire pour atteindre la pression souhaitée, ou pression de consigne, dans le réservoir en régime transitoire (i.e. lors d'un changement de consigne en pression). Plus ce temps est court, plus la dynamique de réponse est bonne. La stabilité en pression correspond à la capacité du dispositif à maintenir constante la pression dans le réservoir en régime permanent. Pour améliorer la dynamique de réponse, il faudrait choisir une électrovanne proportionnelle dont la section d'ouverture maximale soit suffisamment grande pour laisser entrer rapidement le gaz dans le réservoir et, ainsi, atteindre rapidement la pression souhaitée. Or, plus la section d'ouverture maximum de l'électrovanne est grande, moins la résolution (ou précision) de l'électrovanne est bonne. En d'autres termes, plus la section d'ouverture maximum est grande, plus la différence minimale entre deux sections d'ouverture consécutives est élevée. Il en résulte une plus grande difficulté à contrôler précisément la section d'ouverture en régime permanent et une moins bonne stabilité en pression. Inversement, une électrovanne de bonne résolution a une petite section d'ouverture maximum, ce qui affecte la dynamique de réponse en pression. On comprend donc qu'il est difficile d'atteindre un compromis satisfaisant entre la dynamique de réponse et la stabilité avec un tel dispositif. Par ailleurs, la consommation en gaz d'un tel dispositif peut être relativement importante, ce qui oblige alors à surdimensionner la pompe utilisée comme source de pression.

Le document "Flow-Rate Control Module (FRCM)" (XP055434466, Extrait de l'Internet : URL : http://www.fluigent.com/wp-content/uploads/2017/03/flyer_ Flow-RateControl-Module.pdf) concerne un dispositif microfluidique de contrôle du débit déjà commercialisé par la société Fluigent S.A. Le document JP 2009 265859 A concerne un dispositif industriel de contrôle du débit comprenant une vanne tout ou rien montée en parallèle avec une vanne proportionnelle. Le document US 5329965 A concerne un autre dispositif de contrôle du débit comprenant une vanne tout ou rien montée en parallèle avec une vanne proportionnelle. Les dispositifs des documents JP 2009 265859 A et US 5329965 A ne sont pas des dispositifs microfluidiques.

L'invention a pour but de résoudre, au moins en partie, les inconvénients précités.

### PRESENTATION GENERALE

L'invention concerne un dispositif microfluidique selon la revendication indépendante 1 et un procédé de régulation selon la revendication indépendante 13 qui met en œuvre un tel dispositif. Des modes de réalisation particuliers sont définis dans les revendications dépendantes.

Le présent exposé concerne un dispositif microfluidique comprenant un réservoir alimentant un microcanal en un premier fluide, et un circuit dans lequel peut s'établir un écoulement d'un deuxième fluide sans contact avec le microcanal. Le circuit traverse le réservoir ou est connecté au réservoir par un conduit. Le circuit comprend une vanne tout ou rien montée en parallèle avec une vanne proportionnelle. Ces vannes sont contrôlables de manière à modifier la pression exercée dans le réservoir par le deuxième fluide sur le premier fluide.

Typiquement, le premier fluide est un liquide et le deuxième fluide est un gaz, même si d'autres combinaisons sont possibles.

On désigne par "dispositif microfluidique" un dispositif mettant en jeu le transport d'un produit au sein d'au moins un microcanal. Par "microcanal", on désigne un canal, qui comporte sur au moins une portion de sa longueur une section dont au moins une dimension mesurée en ligne droite d'un bord à un bord opposé est sensiblement inférieure au millimètre. Un microcanal peut présenter, par exemple, un rapport surface/volume sensiblement supérieur à 1 mm⁻¹, de préférence 4 mm⁻¹, par exemple 10 mm⁻¹, voire 1 µm⁻¹. Dans le présent exposé, le terme "microcanal" englobe également les canaux appelés "nanocanal", "canal microfluidique", "mésocanal" et "canal mésofluidique". Un microcanal peut présenter une section transversale constante ou non. Cette section peut, par exemple, être circulaire, rectangulaire, carrée ou avoir une forme de cuvette. Lorsque la section est rectangulaire, le microcanal peut, par exemple, présenter une épaisseur comprise entre 10 µm et 100 µm et une largeur comprise entre 20 µm et 1 mm, notamment une largeur comprise entre 20 µm et 500 µm. Toujours à titre d'exemple, le microcanal peut présenter une longueur comprise entre 1 mm et 50 cm, notamment entre 1 cm et 10 cm, par exemple 2 cm.

On désigne par "réservoir" une enceinte fermée capable de contenir les premier et deuxième fluides sous pression. En plus du microcanal qui débouche dans le réservoir, soit le circuit comprend deux branches débouchant directement dans le réservoir, soit le circuit est relié au réservoir par un conduit qui débouche dans le réservoir.

On désigne par "vanne proportionnelle" une vanne pouvant être ouverte avec plus ou moins d'amplitude entre sa position de fermeture maximum et sa position d'ouverture maximum. En d'autres termes, la section d'ouverture d'une vanne proportionnelle peut varier de manière sensiblement continue entre une section d'ouverture minimum et une section d'ouverture maximum. Par contraste, une vanne tout ou rien ne peut prendre que deux positions: une position ouverte dans laquelle sa section d'ouverture est maximum et une position fermée dans laquelle sa section d'ouverture est minimum et généralement nulle. Une vanne tout ou rien est également appelée "vanne on/off".

La vanne proportionnelle et la vanne tout ou rien peuvent être contrôlées électriquement (il s'agit dans ce cas d'éléctrovannes), pneumatiquement ou hydrauliquement par un système de régulation. Le système de régulation peut, par exemple, contrôler l'ouverture des vannes en fonction d'une information de pression délivrée par un capteur de pression mesurant la pression du deuxième fluide dans le réservoir. Des exemples de systèmes et de procédés de régulation des vannes seront décrits plus en détail ci-après.

La vanne tout ou rien est montée en parallèle (ou en dérivation) avec la vanne proportionnelle. Un tel montage permet, en régime transitoire, d'ouvrir la vanne tout ou rien et, en régime permanent, d'ouvrir la vanne proportionnelle et de fermer la vanne tout ou rien.

Il devient alors possible de choisir une vanne tout ou rien ayant une section d'ouverture maximum importante pour laisser passer rapidement le gaz en régime transitoire et, ainsi, améliorer la dynamique de réponse en pression du dispositif. La dynamique de réponse en pression est d'autant meilleure que la rapidité de réponse d'une vanne tout ou rien est supérieure à celle d'une vanne proportionnelle (i.e. une vanne tout ou rien s'ouvre et se ferme plus rapidement qu'une vanne proportionnelle en réponse à un signal de commande).

Il devient également possible de choisir la section d'ouverture maximum de la vanne proportionnelle inférieure à la section d'ouverture maximum de la vanne tout ou rien. Ceci permet d'avoir une vanne proportionnelle de bonne résolution et, de ce fait, d'améliorer la stabilité en pression du dispositif en régime permanent. Le dispositif microfluidique présente ainsi, à la fois, une bonne dynamique de réponse en pression et une bonne stabilité en pression et ceci pour tous types de volumes à pressuriser.

En particulier, la section d'ouverture maximum de la vanne proportionnelle peut être inférieure à 20%, en particulier inférieure à 5% et plus particulièrement à 3% de la section d'ouverture maximum de la vanne tout ou rien. Par exemple, lorsque les vannes ont des sections d'ouverture circulaire, le diamètre de la section d'ouverture maximum de la vanne proportionnelle peut être de 0,2 mm (soit une section d'ouverture maximum d'environ 0,1 mm²), tandis que le diamètre de la section d'ouverture maximum de la vanne tout ou rien peut être de 1 mm (soit une section d'ouverture maximum d'environ 3,1 mm²).

Dans certains modes de réalisation, le dispositif microfluidique comprend un système de régulation permettant de contrôler la vanne tout ou rien et la vanne proportionnelle de manière à modifier la pression exercée dans le réservoir par le deuxième fluide sur le premier fluide pour que cette pression atteigne une pression de consigne, le système de régulation étant configuré pour, suite à un changement de pression de consigne:
- dans une première phase, commander l'ouverture de la vanne tout ou rien afin de remplir ou vider rapidement le réservoir en deuxième fluide et atteindre rapidement une pression dans le réservoir proche de la pression de consigne,
- puis commander la fermeture de la vanne tout ou rien et contrôler la vanne proportionnelle pour que la pression dans le réservoir atteigne et se maintienne à la pression de consigne.

Par ailleurs, lors des recherches ayant conduit à l'invention, il a été découvert que le débit important de la vanne tout ou rien pouvait, dans certains cas, créer dans le circuit des oscillations de pression indésirables, en particulier à la fermeture de la vanne tout ou rien. Aussi, dans certains modes de réalisation, pour limiter ces phénomènes d'oscillation, le dispositif microfluidique comprend un système d'amortissement des oscillations de pression induites par l'ouverture ou la fermeture de la vanne tout ou rien.

Selon une variante, le système d'amortissement comprend un matériau poreux à pores ouverts placé dans le circuit en série avec la vanne tout ou rien et en parallèle avec la vanne proportionnelle. En particulier, il peut s'agir d'un matériau polymère poreux, d'une mousse métallique ou d'un matériau céramique poreux.

Selon une autre variante, le système d'amortissement comprend un amortisseur placé dans une branche latérale fermée du circuit. On désigne par "amortisseur" un système comprenant une pièce mise en mouvement par le deuxième fluide circulant dans la branche latérale fermée du circuit, et des moyens pour absorber l'énergie cinétique de la pièce en mouvement. On désigne également par "amortisseur" un milieu poreux dans lequel le deuxième fluide peut se disperser.

Dans certains modes de réalisation, le circuit comprend une première branche et une deuxième branche situées de part et d'autre du réservoir, ces deux branches débouchant directement dans le réservoir. En variante, lorsque le circuit est connecté au réservoir par un conduit, il comprend une première branche et une deuxième branche situées de part et d'autre de la jonction entre le circuit et le conduit.

L'une des branches parmi les première et deuxième branches constitue une branche d'entrée et l'autre branche constitue une branche de sortie. Une vanne tout ou rien et une vanne proportionnelle peuvent être montées en parallèle sur la branche d'entrée pour contrôler efficacement la pressurisation du réservoir, sur la branche de sortie pour contrôler efficacement la dépressurisation du réservoir, ou sur les deux branches pour contrôler efficacement, à la fois, la pressurisation et la dépressurisation du réservoir.

Dans certains modes de réalisation, la première branche comprend la vanne tout ou rien et la vanne proportionnelle montées en parallèle, étant entendu que la première branche peut constituer la branche d'entrée ou la branche de sortie du deuxième fluide.

Dans certains modes de réalisation, la deuxième branche comprend un étranglement, étant entendu que la première branche peut constituer la branche d'entrée ou la branche de sortie du deuxième fluide. Cet étranglement peut être à ouverture fixe ou à ouverture variable. Il peut être formé, par exemple, par une vanne à pointeau ou une électrovanne. En particulier, il peut être formé par une autre vanne proportionnelle et cette vanne peut être contrôlée par un système de régulation. La vanne proportionnelle de la première branche et la vanne proportionnelle de la deuxième branche peuvent être identiques.

Dans certains modes de réalisation, au moins la vanne tout ou rien et la vanne proportionnelle sont commandées par un système de régulation en fonction d'une information liée à l'écoulement ou à la pression. Cette information peut être délivrée par un capteur de pression ou d'écoulement (ou de débit) de liquide ou de gaz, par exemple. Les capteurs peuvent être disposés au niveau du microcanal, dans le réservoir, dans la première branche ou dans la deuxième branche. D'autres types de capteurs peuvent être utilisés, tels que des détecteurs d'espèces ou de molécules, à fluorescence, électrochimiques, d'absorption, à résonance plasmon, par ampérométrie cyclique, électronique, électrique, ou encore des biocapteurs. La régulation peut également se faire en fonction d'une information récupérée par analyse d'image. On peut notamment observer l'écoulement dans un microcanal au moyen d'une caméra et contrôler les vannes en fonction des déplacements observés du produit dans le microcanal.

Le système de régulation peut comporter une unité de traitement, une unité de contrôle, une unité d'échange, une mémoire et/ou tout autre moyen permettant de mettre en œuvre un algorithme de régulation et de commander en conséquence l'ouverture et la fermeture des vannes.

Dans certains modes de réalisation, l'ensemble des vannes (étranglement compris, lorsque celui-ci est une vanne) sont commandées par le système de régulation. Ceci permet de mettre en place une automatisation poussée, par exemple pour effectuer sans intervention humaine le remplacement des échantillons de produit et/ou d'une matrice de séparation, enchaîner une multiplicité d'opérations telles que des séparations, des rinçages, des changements de produit, des introductions d'échantillons, des réactions chimiques.

Dans certains modes de réalisation, le microcanal est relié à chaque extrémité à un réservoir, chaque réservoir étant en communication avec un circuit dans lequel peut s'établir un écoulement d'un fluide (différent du premier fluide), sans contact avec le microcanal.

Dans certains modes de réalisation, le dispositif microfluidique comprend au moins un réservoir et une pluralité de microcanaux dont deux au moins sont reliés chacun à une extrémité à un réservoir, chaque réservoir étant en communication avec un circuit dans lequel peut s'établir un écoulement d'un fluide (différent des fluides s'écoulant dans les microcanaux), sans contact avec le microcanal, et l'un au moins des circuits est contrôlable de manière à modifier la pression à l'extrémité du microcanal associé. Au moins deux des microcanaux précités peuvent être connectés entre eux.

Dans certains modes de réalisation, le deuxième circuit comprend une autre vanne tout ou rien montée en parallèle avec l'étranglement. Un tel montage permet, en régime transitoire, d'ouvrir la vanne tout ou rien et, en régime permanent, de fermer cette vanne. Il devient alors possible de choisir une vanne tout ou rien ayant une section d'ouverture maximum importante pour laisser passer rapidement le gaz en régime transitoire et, ainsi, améliorer la dynamique de réponse en pression du dispositif. Il devient également possible de choisir la section de passage de l'étranglement suffisamment faible pour limiter, en régime permanent, la consommation du dispositif en deuxième fluide. Le dispositif microfluidique présente ainsi, à la fois, une bonne dynamique de réponse en pression et une consommation réduite. En outre, lorsque l'étranglement est formé par une vanne proportionnelle, il est possible de choisir une vanne ayant une section de passage faible et, donc, une bonne résolution. Ceci favorise la stabilité en pression du dispositif.

Le présent exposé concerne également un procédé de régulation pour réguler la pression d'un premier fluide dans un microcanal, dans lequel on fournit un dispositif microfluidique tel que précédemment décrit, on fait circuler un deuxième fluide dans le circuit, et on contrôle la vanne tout ou rien et la vanne proportionnelle de manière à modifier la pression exercée dans le réservoir par le deuxième fluide sur le premier fluide.

En particulier, la vanne tout ou rien et la vanne proportionnelle sont contrôlées de sorte que, au moins au début du régime transitoire, la vanne tout ou rien soit ouverte et, en régime permanent, la vanne tout ou rien soit fermée et la vanne proportionnelle soit ouverte.

Ainsi, dans certains modes de mise en œuvre du procédé, suite à un changement de pression de consigne, dans une première phase, la vanne tout ou rien est ouverte afin de remplir ou vider rapidement le réservoir en deuxième fluide et atteindre rapidement une pression dans le réservoir proche de la pression de consigne, puis la vanne tout ou rien est fermée et la vanne proportionnelle est contrôlée pour que la pression dans le réservoir atteigne et se maintienne à la pression de consigne.

Dans certains modes de mise en œuvre du procédé, suite à la première phase, dans une deuxième phase, la vanne tout ou rien est fermée et la vanne proportionnelle est ouverte complètement pour atteindre la pression de consigne, et, dans une troisième phase, la vanne tout ou rien reste fermée et on joue sur l'ouverture de la vanne proportionnelle afin de stabiliser la pression dans le réservoir. La première et la deuxième phase correspondent, respectivement, au début et à la fin du régime transitoire. La troisième phase correspond au régime permanent.

On désigne par régime transitoire la phase postérieure à un changement de consigne en pression, durant laquelle la pression dans le réservoir varie pour atteindre une pression souhaitée (ou pression de consigne). En d'autres termes, il s'agit de la phase durant laquelle l'augmentation ou la diminution de pression dans le réservoir est importante. Par contraste, le régime permanent est la phase durant laquelle la pression dans le réservoir est sensiblement stable et égale à la pression souhaitée.

Les caractéristiques et avantages précités, ainsi que d'autres, apparaîtront à la lecture de la description détaillée qui suit, d'exemples de réalisation du dispositif microfluidique proposé. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention. De plus, les symboles graphiques utilisés pour représenter les différents composants des dispositifs microfluidiques représentés ne correspondent pas nécessairement aux symboles normalisés. Ces symboles ne préjugent donc pas de la nature ou du fonctionnement de ces composants. Pour connaître la nature ou le fonctionnement de ces composants, il convient de se référer à la description détaillée qui suit.

Sur ces dessins, d'une figure (FIG) à l'autre, des éléments (ou parties d'élément) identiques ou analogues sont repérés par les mêmes signes de référence.

La FIG 1 représente schématiquement et partiellement un exemple de dispositif microfluidique.

La FIG 2 représente schématiquement et partiellement un autre exemple de dispositif microfluidique.

La FIG 3 représente schématiquement et partiellement un autre exemple de dispositif microfluidique.

Les FIGS 4 et 5 représentent schématiquement des exemples de réalisation dans lesquels le dispositif microfluidique est équipé d'un système d'amortissement des oscillations de pression.

### DESCRIPTION DETAILLEE D'EXEMPLE(S)

Des exemples de réalisation sont décrits en détail ci-après, en référence aux dessins annexés. Ces exemples illustrent les caractéristiques et les avantages de l'invention. Il est toutefois rappelé que l'invention ne se limite pas à ces exemples.

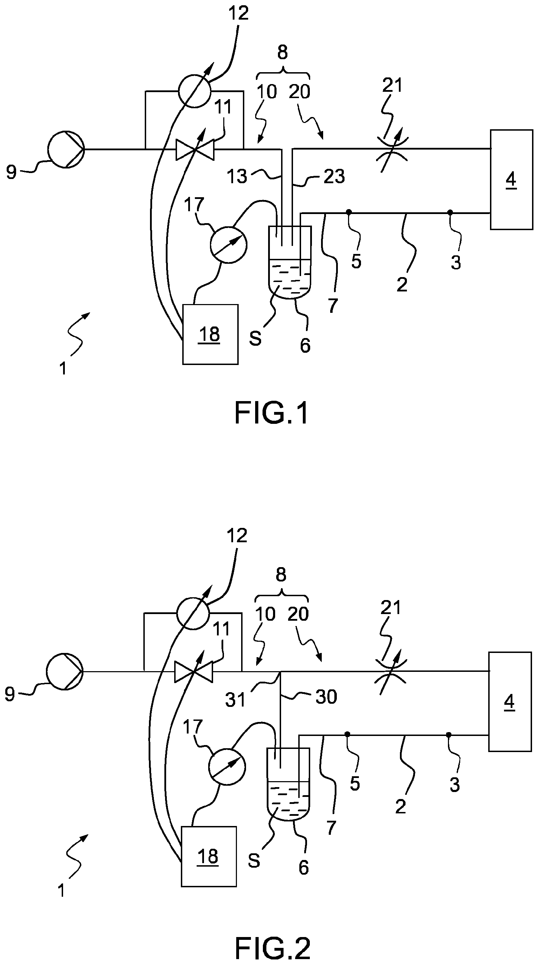

La FIG 1 représente un premier exemple de dispositif microfluidique 1. Le dispositif 1 comprend un microcanal 2 relié, à une extrémité 3, à une source de pression 4 et, à l'autre extrémité 5, à un réservoir 6 par l'intermédiaire d'un conduit 7. Le réservoir 6 contient un produit S, liquide dans cet exemple, à distribuer dans le microcanal 2. Le réservoir 6 communique, d'une part, avec un conduit 13 appartenant à une première branche 10, ou branche d'entrée, d'un circuit 8 et, d'autre part, avec un conduit 23 appartenant à une deuxième branche 20, ou branche de sortie, du circuit 8.

La première branche 10 est raccordée à une première source de pression 9. Cette source de pression 9 est, par exemple, une pompe (comme représenté sur la FIG 1) ou une bouteille de gaz comprimé (e.g. de l'azote) associée à un manodétendeur (non représenté) permettant d'alimenter le circuit 8 en gaz à une pression constante P2. La deuxième branche 20 est raccordée à une deuxième source de pression 4 à une pression P1. Dans l'exemple, la pression P2 est supérieure à la pression P1. En variante, l'une au moins des branches 10 et 20 comporte une source de pression ou de dépression telle que, par exemple, une enceinte de gaz, une pompe ou un détendeur, et l'une au moins des branches 10 et 20 communique avec l'atmosphère ambiante. On considère dans le présent exposé que l'atmosphère constitue également une source de pression. Quelle que soit la configuration retenue, on comprend qu'un écoulement de gaz peut s'établir dans le circuit 8, cet écoulement passant par la première branche 10, le réservoir 6 et la deuxième branche 20. Cet écoulement ne passe pas par le microcanal 2. Dans le réservoir 6, il existe une interface entre le gaz (i.e. un exemple de deuxième fluide au sens du présent exposé) et le produit S (i.e. un exemple de premier fluide au sens du présent exposé) et le gaz exerce une pression sur le produit S. Le déplacement du produit S dans le microcanal 2 dépend de cette pression et de la pression P1.

Une vanne proportionnelle 11 est disposée sur la première branche 10 du circuit 8 afin de réguler le débit de gaz provenant de la source de pression 9. La première branche 10 du circuit 8 comprend également une vanne tout ou rien 12 montée en parallèle avec la vanne proportionnelle 11. Ces deux vannes 11, 12 sont reliées à un système de régulation 18 permettant de contrôler l'ouverture de ces vannes en fonction d'une information de pression délivrée par un capteur de pression 17 mesurant la pression du gaz dans le réservoir 6. Il est ainsi possible de contrôler de manière dynamique la pression du gaz dans le réservoir 6. Le système de régulation 18 peut être agencé pour prendre en compte d'autres informations et, notamment, celles liées à l'écoulement du produit S dans le microcanal 2. La vanne proportionnelle 11 est, par exemple, une électrovanne commandée électriquement par le système de régulation 18.

Un étranglement 21 est présent dans la deuxième branche 20 du circuit 8 afin de contrôler le débit de gaz quittant le réservoir 6. Il peut s'agir d'un étranglement à ouverture fixe ou variable. Lorsque l'étranglement 21 est à ouverture variable, cette ouverture peut être réglée manuellement ou être contrôlée par le système de régulation 18. Dans l'exemple de la figure 1, l'étranglement 21 est formé par une vanne à pointeau dont l'ouverture peut être réglée manuellement.

En ouvrant au moins une des vannes 11, 12 et l'étranglement 21, il est possible d'établir un écoulement de gaz dans la première branche 10, le réservoir 6 et la deuxième branche 20 du circuit 8. La deuxième branche 20 constitue une fuite pour le gaz contenu dans le réservoir 6 et provenant de la première branche 10. Le débit du produit S dans le microcanal 2 est réglable en agissant notamment sur la différence de pression entre les deux extrémités 3, 5 du microcanal 2. Par analogie avec les circuits électriques, on peut relier cette différence de pression P au débit I par la formule: P = R I ou R est appelée la résistance microfluidique. Dans l'exemple considéré, on note Rc la résistance microfluidique associée au microcanal, R_{f} celle associée à la deuxième branche 20 et Rₑ celle associée à la première branche 10. En régime stationnaire, le débit I_{c} dans le canal est donné par: I_{c}= P_{f} /R_{c} où Pf = P1 R_{f}R_{c}/(R_{f}R_{c}+RₑR_{f}+RₑR_{c}). On comprend qu'il est possible de régler ce débit I_{c} en faisant varier l'ouverture de la vanne proportionnelle 11, c'est-à-dire la résistance Rₑ.

Concernant la régulation des vannes 11 et 12, celle-ci peut se faire de la manière suivante.

Suite à un changement de consigne en pression. Dans une première phase, la vanne tout ou rien 12 est ouverte afin de remplir rapidement le réservoir 6 et atteindre une pression proche de la pression de consigne. Dans une deuxième phase, la vanne tout ou rien 12 est fermée et la vanne proportionnelle 11 est ouverte complètement pour atteindre la valeur de consigne. Dans une troisième phase, la vanne tout ou rien 12 reste fermée et on joue sur l'ouverture de la vanne proportionnelle 11 afin de stabiliser la pression dans le réservoir en compensant la perte de pression due à la fuite du deuxième fluide dans la deuxième branche 20 via l'étranglement 21. Les première et deuxième phases correspondent à un régime transitoire, tandis que la troisième phase correspond à un régime permanent du système. Le passage d'une phase à l'autre peut, par exemple, être déterminé en fonction de la différence entre la pression de consigne et la pression mesurée dans le réservoir.

On notera que selon une variante de réalisation (non représentée), les vannes 11, 12 pourraient être montées sur la deuxième branche 20 du circuit 8, tandis que l'étranglement 21 serait monté sur la première branche 10. Dans ce cas, lors de la première phase de régulation, l'ouverture de la vanne tout ou rien 12 permettrait de vider (au lieu de remplir) rapidement le réservoir 6.

La FIG 2 représente un deuxième exemple de dispositif microfluidique 1. Cet exemple diffère de celui de la figure 1 en ce que le circuit 8 est connecté au réservoir 6 par un conduit unique 30. Le circuit 8 comprend alors une première branche 10 et une deuxième branche 20 situées de part et d'autre de la jonction 31 entre le circuit 8 et le conduit 30 menant au réservoir 6. Les composants du circuit dans ces deux branches 10, 20 sont identiques aux composants du circuit 8 dans les première et deuxième branches 10, 20 du circuit de la figure 1. La régulation de la vanne tout ou rien 12 et de la vanne proportionnelle 11 se fait de manière analogue à celle décrite pour l'exemple de la figure 1.

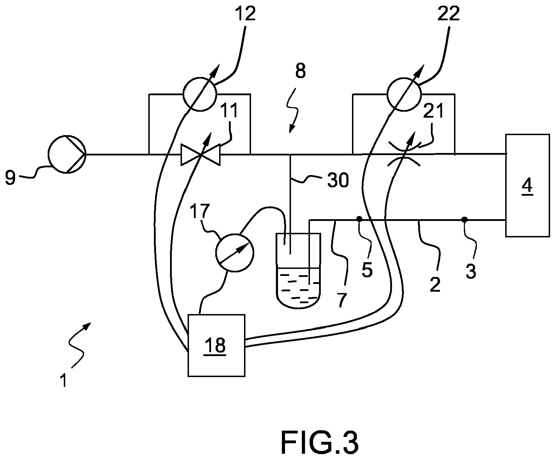

La FIG 3 représente un troisième exemple de dispositif microfluidique 1. Cet exemple diffère de celui de la figure 2 en ce qu'une autre vanne tout ou rien 22 est montée en parallèle avec l'étranglement dans la deuxième branche 20 du circuit 8. La vanne tout ou rien 22 peut être identique ou analogue à la vanne tout ou rien 12. De même, l'étranglement peut être formé par une autre vanne proportionnelle 21, identique ou analogue à la vanne proportionnelle 11. A titre d'exemple, les vannes tout ou rien 12, 22 ont un diamètre d'ouverture de 1 mm, tandis que les vannes proportionnelles 11, 21 ont un diamètre d'ouverture maximum de 0,2 mm.

Dans l'exemple, l'ensemble des vannes 11, 12, 21, 22 sont commandées par le système de régulation 18 et la régulation peut se faire de la manière suivante.

Suite à un changement de consigne en pression, dans une première phase, une analyse de la différence de pression entre la pression mesurée dans le réservoir 6 par le capteur 17 et la consigne permet de dire si les vannes tout ou rien 12, 22 doivent être activées ou non. Si la différence de pression est inférieure à une pression seuil prédéfinie on entre directement dans la deuxième phase. Si la différence de pression est plus grande que la pression seuil, l'une des deux vannes tout ou rien 12, 22 s'ouvre jusqu'à ce que la pression dans le réservoir ait atteint un certain pourcentage de la pression de consigne. La pression seuil peut être un pourcentage de la valeur maximum en pression que peut atteindre le réservoir, par exemple 20 %. Par exemple, dans le cas où la pression dans le réservoir doit être augmentée, la vanne tout ou rien 12 est ouverte pour que la pression dans le réservoir 6 augmente jusqu'à un certain pourcentage, e.g. 90%, de la pression de consigne, les autres vannes étant fermées. Dans le cas où la pression dans le réservoir doit être diminuée, la vanne tout ou rien 22 est ouverte pour que la pression dans le réservoir 6 diminue jusqu'à un certain pourcentage, e.g. 110%, de la pression de consigne, les autres vannes étant fermées. Dès la fermeture de l'une des deux vannes tout ou rien 12, 22, la première phase est terminée et on entre dans une deuxième phase.

Au départ de la deuxième phase, la pression dans le réservoir 6 est proche de la pression de consigne. L'une des vannes proportionnelles 11, 21 est ouverte au maximum pour rattraper le plus vite possible l'écart à la consigne, les autres vannes étant fermées. La vanne proportionnelle 11 (21) joue alors le même rôle que la vanne tout ou rien 12 (22) dans la première phase mais à un débit beaucoup plus faible (e.g. environ 25 fois plus faible) du fait de la différence de taille entre la section d'ouverture maximum de la vanne proportionnelle 11 (21) et la section d'ouverture de la vanne tout ou rien 12 (22). Dès que la pression dans le réservoir 6 atteint la pression de consigne, on entre dans la troisième phase.

Au départ de la troisième phase, la pression de consigne est atteinte. Dans la troisième phase, on joue sur les ouvertures des deux vannes proportionnelles 11, 21 afin de compenser la perte ou le gain de pression dû à l'écoulement de fluide sortant ou entrant dans le réservoir 6. La régulation est faite, par exemple, à l'aide d'un régulateur "PID" (Proportionnel, Intégrateur, Dérivateur) mettant en œuvre un algorithme de calcul qui délivre un signal de commande à partir de la différence entre la pression de consigne et la pression mesurée, afin de maintenir la pression dans le réservoir 6 à la pression de consigne. Un tel système possède deux degrés de liberté: les degrés d'ouvertures des deux vannes proportionnelles 11, 21, et plusieurs combinaisons d'ouvertures des vannes sont possibles pour obtenir la même pression. On choisit alors, de préférence, une combinaison permettant de limiter au maximum la consommation en deuxième fluide. Les deux vannes proportionnelles 11, 21 ayant une bonne résolution (du fait de leur section d'ouverture maximum limitée), le nombre de combinaisons possibles est plus important qu'avec des vannes de mauvaise résolution. Ceci permet de mieux limiter la consommation en deuxième fluide.

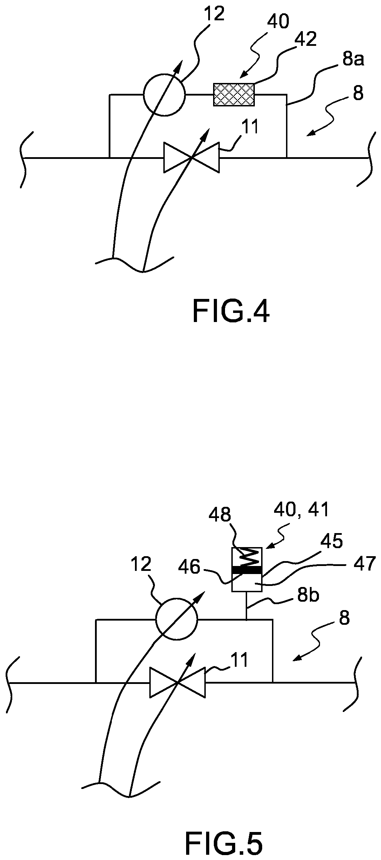

Les FIGS 4 et 5 représentent schématiquement des exemples de réalisation dans lesquels le dispositif microfluidique 1 est équipé d'un système d'amortissement 40 des oscillations de pression. Dans ces exemples, le système d'amortissement 40 est associé à la vanne tout ou rien 12 des FIGS. 1, 2 ou 3. Il pourrait toutefois être associé à la vanne tout ou rien 22 de la FIG. 3, ou deux systèmes d'amortissement 40 pourraient être associés, respectivement, aux vannes 12 et 22.

Le débit important de la vanne tout ou rien 12 (ou 22) peut, dans certains cas, créer dans le circuit 8 des oscillations de pression indésirables, en particulier à l'ouverture ou à la fermeture de la vanne 12. Pour limiter ces phénomènes d'oscillation, le dispositif microfluidique 1 peut être équipé d'un système d'amortissement 40 des oscillations de pression.

Dans l'exemple de la FIG. 4, le système d'amortissement 40 comprend un matériau poreux 42 à pores ouverts placé dans le circuit 8, entre la vanne tout ou rien 12 et le réservoir 6. Plus précisément, le système d'amortissement 40 est placé en série avec la vanne tout ou rien 12 et en parallèle avec la vanne proportionnelle 11. En d'autres termes, le système d'amortissement 40 est placé dans la portion de dérivation 8a du circuit 8 contournant la vanne proportionnelle 11. Le deuxième fluide circulant dans la portion de dérivation 8a traverse ainsi le matériau poreux 42 en se dispersant dans les pores de celui-ci. Cette dispersion permet d'amortir tout ou partie des oscillations de pression du deuxième fluide induites lors de l'ouverture ou de la fermeture de la vanne tout ou rien 12. En outre, lorsque la vanne tout ou rien 12 est fermée et que la vanne proportionnelle 11 est ouverte, la présence du système d'amortissement 40 est sans incidence sur la circulation du deuxième fluide dans le circuit 8, le deuxième fluide ne circulant plus dans la portion de dérivation 8a.

Dans l'exemple de la FIG. 5, le système d'amortissement 40 comprend un amortisseur 41 placé dans une branche latérale fermée 8b du circuit 8. Une extrémité de la branche latérale 8b est raccordée à la branche principale du circuit 8, qui s'étend entre le réservoir 6 est les vannes 11, 12, et l'extrémité opposée de la branche latérale 8b est fermée. Le deuxième fluide entre ainsi dans la branche latérale 8b par une extrémité sans pouvoir s'échapper par l'autre extrémité de cette branche 8b. Dans l'exemple représenté schématiquement sur la FIG. 5, l'amortisseur 41 comprend un cylindre 45 à l'intérieur duquel se déplace une pièce mobile 46. La pièce mobile 46 sépare le volume du cylindre 45 en deux chambres 47, 48 isolées l'une de l'autre. Un ressort 48 ou équivalent est placé dans la deuxième chambre 48. Un orifice permet au deuxième fluide circulant dans la branche latérale 8b de pénétrer dans la première chambre 47. La pression du deuxième fluide dans la chambre 47 pousse la pièce mobile 46 vers la deuxième chambre 48 et comprime le ressort 48 qui, en réaction, repousse la pièce mobile 46 vers la première chambre 47. L'action combinée du ressort 48 et des frottements entre la pièce mobile 46 et le cylindre 45 permettent d'amortir le mouvement de la pièce 46. Bien entendu, d'autres types d'amortisseurs 41 pourraient être envisagés. Par exemple, le ressort 48 pourrait être remplacé par un fluide compressible, un matériau élastique, une membrane, etc. Par ailleurs, dans l'exemple de la FIG. 5, la branche latérale 8b est raccordée à la branche principale du circuit 8 en aval de la vanne tout ou rien 12, dans la portion de dérivation du circuit 8 contournant la vanne proportionnelle 11. La branche latérale 8b pourrait toutefois être raccordée à la branche principale du circuit 8 à d'autres endroits, sans que cela n'affecte le fonctionnement général du dispositif microfluidique 1 et la fonction d'amortissement du système 40.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

Enfin, les différentes caractéristiques des modes ou exemples de réalisation décrits dans le présent exposé peuvent être considérées isolément ou être combinées entre elles. Lorsqu'elles sont combinées, ces caractéristiques peuvent l'être comme décrit ci-dessus ou différemment, l'invention ne se limitant pas aux combinaisons spécifiques précédemment décrites. En particulier, sauf précision contraire ou incompatibilité technique, une caractéristique décrite en relation avec un mode ou exemple de réalisation peut être appliquée de manière analogue à un autre mode ou exemple de réalisation.

## Revendications

1. Dispositif microfluidique comprenant un réservoir (6) alimentant un microcanal (2) en un premier fluide (S), et un circuit (8) dans lequel peut s'établir un écoulement d'un deuxième fluide sans contact avec le microcanal (2),
dans lequel le circuit (8) traverse le réservoir (6) ou est connecté au réservoir (6) par un conduit (30),
**caractérisé en ce que** le circuit (8) comprend une vanne tout ou rien (12) montée en parallèle avec une vanne proportionnelle (11), la section d'ouverture maximum de la vanne proportionnelle (11) étant inférieure à la section d'ouverture maximum de la vanne tout ou rien (12), ces vannes (11, 12) étant contrôlables de manière à modifier la pression exercée dans le réservoir (6) par le deuxième fluide sur le premier fluide (S).

2. Dispositif microfluidique selon la revendication 1, comprenant un système de régulation permettant de contrôler la vanne tout ou rien (12) et la vanne proportionnelle (11) de manière à modifier la pression exercée dans le réservoir (6) par le deuxième fluide sur le premier fluide (S) pour que cette pression atteigne une pression de consigne, le système de régulation étant configuré pour, suite à un changement de pression de consigne:
- dans une première phase, commander l'ouverture de la vanne tout ou rien (12) afin de remplir ou vider rapidement le réservoir (6) en deuxième fluide et atteindre rapidement une pression dans le réservoir (6) proche de la pression de consigne,
- puis commander la fermeture de la vanne tout ou rien (12) et contrôler la vanne proportionnelle pour que la pression dans le réservoir (6) atteigne et se maintienne à la pression de consigne.

3. Dispositif microfluidique selon la revendication 1 ou 2, dans lequel la section d'ouverture maximum de la vanne proportionnelle (11) est inférieure à 20%, en particulier inférieure à 5%, de la section d'ouverture maximum de la vanne tout ou rien (12).

4. Dispositif microfluidique selon l'une quelconque des revendications 1 à 3, comprenant un système d'amortissement (40) des oscillations de pression induites par l'ouverture ou la fermeture de la vanne tout ou rien (12).

5. Dispositif selon la revendication 4, dans lequel le système d'amortissement (40) comprend un matériau poreux (42) à pores ouverts placé dans le circuit en série avec la vanne tout ou rien (12) et en parallèle avec la vanne proportionnelle (11).

6. Dispositif selon la revendication 4, dans lequel le système d'amortissement (40) comprend un amortisseur (41) placé dans une branche latérale fermée du circuit (8).

7. Dispositif microfluidique selon l'une quelconque des revendications 1 à 6, dans lequel le circuit (8) comprend une première branche (10) et une deuxième branche (20) situées de part et d'autre du réservoir (6), ces deux branches (10, 20) débouchant directement dans le réservoir (6).

8. Dispositif microfluidique selon l'une quelconque des revendications 1 à 6, dans lequel le circuit comprend une première branche (10) et une deuxième branche (20) situées de part et d'autre de la jonction (31) entre le circuit (8) et le conduit (30) menant au réservoir (6).

9. Dispositif microfluidique selon la revendication 7 ou 8, dans lequel la première branche (10) comprend la vanne (12) tout ou rien et la vanne proportionnelle (11).

10. Dispositif microfluidique selon la revendication 9, dans lequel la deuxième branche (20) comprend un étranglement (21) formé, par exemple, par une autre vanne proportionnelle.

11. Dispositif microfluidique selon la revendication 9 ou 10, dans lequel la deuxième branche (20) comprend une autre vanne tout ou rien (22) montée en parallèle avec l'étranglement (21).

12. Dispositif microfluidique selon l'une quelconque des revendications 1 à 11, dans lequel le premier fluide (S) est un liquide et le deuxième fluide est un gaz.

13. Procédé de régulation pour réguler la pression d'un premier fluide (S) dans un microcanal (2), dans lequel:
- on fournit un dispositif microfluidique (1) selon l'une quelconque des revendications 1 à 12,
- on fait circuler un deuxième fluide dans le circuit, et
- on contrôle la vanne tout ou rien (12) et la vanne proportionnelle (11) de manière à modifier la pression exercée dans le réservoir (6) par le deuxième fluide sur le premier fluide (S) pour que cette pression atteigne une pression de consigne.

14. Procédé de régulation selon la revendication 13, dans lequel, suite à un changement de pression de consigne:
- dans une première phase, la vanne tout ou rien (12) est ouverte afin de remplir ou vider rapidement le réservoir (6) en deuxième fluide et atteindre rapidement une pression dans le réservoir (6) proche de la pression de consigne,
- puis la vanne tout ou rien (12) est fermée et la vanne proportionnelle (11) est contrôlée pour que la pression dans le réservoir (6) atteigne et se maintienne à la pression de consigne.

15. Procédé de régulation selon la revendication 14, dans lequel, suite à la première phase:
- dans une deuxième phase, la vanne tout ou rien (12) est fermée et la vanne proportionnelle (11) est ouverte complètement pour atteindre la pression de consigne dans le réservoir (6), et
- dans une troisième phase, la vanne tout ou rien (12) reste fermée et on joue sur l'ouverture de la vanne proportionnelle (11) afin de stabiliser la pression dans le réservoir (6).

## Patentansprüche

1. Mikrofluidische Vorrichtung mit einem Reservoir (6), das einen Mikrokanal (2) mit einem ersten Fluid (S) speist, und einen Kreislauf (8), in dem sich eine Strömung eines zweiten Fluids ohne Kontakt mit dem Mikrokanal (2) einstellen kann;
wobei der Kreislauf (8) durch das Reservoir (6) verläuft oder durch eine Leitung (30) mit dem Reservoir (6) verbunden ist,
**dadurch gekennzeichnet, dass** der Kreislauf (8) ein Ein/Aus-Ventil (12) aufweist, das parallel zu einem Proportionalventil (11) montiert ist, wobei der maximale Öffnungsquerschnitt des Proportionalventils (11) kleiner ist als der maximale Öffnungsquerschnitt des Ein/Aus-Ventils (12), wobei diese Ventile (11, 12) steuerbar sind, um den Druck zu verändern, den das zweite Fluid in dem Reservoir (6) auf das erste Fluid (S) ausübt.

2. Mikrofluidische Vorrichtung nach Anspruch 1, mit einem Regelsystem, das es ermöglicht, das Ein/Aus-Ventil (12) und das Proportionalventil (11) zu steuern, um den Druck zu verändern, der durch das zweite Fluid in dem Reservoir (6) auf das erste Fluid (S) ausgeübt wird, so dass dieser Druck einen Solldruck erreicht, wobei das Regelsystem dazu ausgebildet ist, nach einer Änderung des Solldrucks:
- in einer ersten Phase das Öffnen des Ein-Aus-Ventils (12) zu steuern, um das Reservoir (6) schnell mit der zweiten Flüssigkeit zu füllen oder zu entleeren und schnell einen dem Solldruck nahen Druck in dem Reservoir (6) zu erreichen,
- danach das Schließen des Ein/Aus-Ventils (12) zu steuern und das Proportionalventil so zu steuern, dass der Druck in dem Reservoir (6) den Solldruck erreicht und auf diesem bleibt.

3. Mikrofluidische Vorrichtung nach Anspruch 1 oder 2, bei welcher der maximalen Öffnungsquerschnitt des Proportionalventiles (11) weniger als 20%, insbesondere weniger als 5%, des maximalen Öffnungsquerschnittes des Ein/Aus-Ventils (12) beträgt.

4. Mikrofluidische Vorrichtung nach einem der Ansprüche 1 bis 3, mit einem System (40) zum Dämpfen der Druckschwingungen, die durch das Öffnen oder Schließen des Ein/Aus-Ventils (12) induziert werden.

5. Vorrichtung nach Anspruch 4, bei welcher das Dämpfungssystem (40) ein poröses Material (42) mit offenen Poren aufweist, das in dem Kreislauf in Reihe mit dem Ein/Aus-Ventil (12) und parallel zu dem Proportionalventil (11) angeordnet ist.

6. Vorrichtung nach Anspruch 4, bei welcher das Dämpfungssystem (40) einen Dämpfer (41) aufweist, der in einem geschlossenen seitlichen Zweig des Kreislaufs (8) angeordnet ist.

7. Mikrofluidische Vorrichtung nach einem der Ansprüche 1 bis 6, bei welcher der Kreislauf (8) einen ersten Zweig (10) und einen zweiten Zweig (20) aufweist, welche auf beiden Seiten des Reservoirs (6) angeordnet sind, wobei die beiden Zweige (10, 20) direkt in das Reservoir (6) münden.

8. Mikrofluidische Vorrichtung nach einem der Ansprüche 1 bis 6, bei welcher der Kreislauf einen ersten Zweig (10) und einen zweiten Zweig (20) aufweist, die auf beiden Seiten der Verbindungsstelle (31) zwischen dem Kreislauf (8) und der zum Reservoir (6) führenden Leitung (30) angeordnet sind.

9. Mikrofluidische Vorrichtung nach Anspruch 7 oder 8, bei welcher der erste Zweig (10) das Ein/Aus-Ventil (12) und das Proportionalventil (11) aufweist.

10. Mikrofluidische Vorrichtung nach Anspruch 9, wobei der zweite Zweig (20) eine Drossel (21) aufweist, die beispielsweise durch ein anderes Proportionalventil gebildet ist.

11. Mikrofluidische Vorrichtung nach Anspruch 9 oder 10, bei welcher der zweite Zweig (20) ein weiteres Ein/Aus-Ventil (22) aufweist, das parallel zu der Drossel (21) angebracht ist.

12. Mikrofluidische Vorrichtung nach einem der Ansprüche 1 bis 11, bei welcher das erste Fluid (S) eine Flüssigkeit und das zweite Fluid ein Gas ist.

13. Regelverfahren zum Regeln des Drucks einer ersten Flüssigkeit (S) in einem Mikrokanal (2), bei welchem:
- eine mikrofluidische Vorrichtung (1) gemäß einem der Ansprüche 1 bis 12 bereitgestellt wird,
- eine zweite Flüssigkeit in dem Kreislauf zirkuliert, und
- das Ein/Aus-Ventil (12) und das Proportionalventil (11) derart gesteuert werden, dass der von der zweiten Flüssigkeit in dem Reservoir (6) auf die erste Flüssigkeit (S) ausgeübte Druck so geändert wird, dass dieser Druck einen Solldruck erreicht.

14. Regelverfahren nach Anspruch 13, bei welchem nach einer Änderung des Solldrucks:
- in einer ersten Phase das Ein/Aus-Ventil (12) geöffnet wird, um das Reservoir (6) schnell mit der zweiten Flüssigkeit zu füllen oder zu entleeren und im Reservoir (6) schnell einen Druck nahe dem Solldruck zu erreichen,
- danach das Ein/Aus-Ventil (12) geschlossen und das Proportionalventil (11) so gesteuert wird, dass der Druck im Reservoir (6) den Solldruck erreicht und auf diesem bleibt.

15. Regelverfahren nach Anspruch 14, bei welchem nach der ersten Phase:
- in einer zweiten Phase das Ein/Aus-Ventil (12) geschlossen und das Proportionalventil (11) vollständig geöffnet wird, um den Solldruck in dem Reservoir (6) zu erreichen, und
- in einer dritten Phase das Ein/Aus-Ventil (12) geschlossen bleibt und das Öffnen des Proportionalventils (11) wird eingestellt, um den Druck in dem Reservoir (6) zu stabilisieren.

## Claims

1. A microfluidic device comprising a tank (6) supplying a microchannel (2) with a first fluid (S), and a circuit (8) in which a flow of a second fluid can be established without contact with the microchannel (2),
wherein the circuit (8) passes through the tank (6) or is connected to the tank (6) by a pipe (30),
**characterized in that** the circuit (8) comprises an on/off valve (12) mounted in parallel with a proportional valve (11), the maximum opening cross-section of the proportional valve (11) being smaller than the maximum opening cross-section of the on/off valve (12), these valves (11, 12) being controllable so as to modify the pressure applied in the tank (6) to the first fluid (S) by the second fluid.

2. A microfluidic device according to claim 1, comprising a control system for controlling the on/off valve (12) and the proportional valve (11) so as to modify the pressure applied in the tank (6) by the second fluid to the first fluid (S) so that this pressure reaches a set pressure, the control system being configured for, following a change in the set pressure:
- in a first phase, open the on/off valve (12) to quickly fill or empty the tank (6) with the second fluid and quickly reach a pressure in the tank (6) close to the set pressure,
- then close the on/off valve (12) and control the proportional valve so that the pressure in the tank (6) reaches and stays at the set pressure.

3. A microfluidic device according to claim 1 or 2, wherein the maximum opening cross-section of the proportional valve (11) is less than 20%, in particular less than 5%, of the maximum opening cross-section of the on/off valve (12).

4. A microfluidic device according to any one of claims 1 to 3, comprising a system for damping (40) pressure oscillations induced by opening or closing the on/off valve (12).

5. A device according to claim 4, wherein the damping system (40) comprises an open-pore porous material (42) placed in the circuit in series with the on/off valve (12) and in parallel with the proportional valve (11).

6. A device according to claim 4, wherein the damping system (40) comprises a damper (41) placed in a closed lateral branch of the circuit (8).

7. A microfluidic device according to any one of claims 1 to 6, wherein the circuit (8) comprises a first branch (10) and a second branch (20) located on either side of the tank (6), these two branches (10, 20) leading directly into the tank (6).

8. A microfluidic device according to any one of claims 1 to 6, wherein the circuit comprises a first branch (10) and a second branch (20) located on either side of the junction (31) between the circuit (8) and the pipe (30) leading to the tank (6).

9. A microfluidic device according to claim 7 or 8, wherein the first branch (10) comprises the on/off valve (12) and the proportional valve (11).

10. A microfluidic device according to claim 9, wherein the second branch (20) comprises a narrowing (21) formed, for example, by another proportional valve.

11. A microfluidic device according to claim 9 or 10, wherein the second branch (20) comprises another on/off valve (22) mounted in parallel with the narrowing (21).

12. A microfluidic device according to any one of claims 1 to 11, wherein the first fluid (S) is a liquid and the second fluid is a gas.

13. A control method for regulating the pressure of a first fluid (S) in a microchannel (2), wherein:
- a microfluidic device (1) according to any one of claims 1 to 12 is supplied;
- a second fluid is circulated in the circuit, and
- the on/off valve (12) and the proportional valve (11) are controlled so as to modify the pressure applied in the tank (6) by the second fluid to the first fluid (S) so that this pressure reaches a set pressure.

14. A control method according to claim 13, wherein, following a change in the set pressure:
- in a first phase, the on/off valve (12) is opened in order to quickly fill or empty the tank (6) with a second fluid and quickly reach a pressure in the tank (6) close to the set pressure,
- then the on/off valve (12) is closed and the proportional valve (11) is controlled so that the pressure in the tank (6) reaches and stays at the set pressure.

15. A control method according to claim 14, in which, following the first phase:
- in a second phase, the on/off valve (12) is closed and the proportional valve (11) is fully opened to reach the set pressure in the tank (6), and
- in a third phase, the on/off valve (12) remains closed and the opening of the proportional valve (11) is used to stabilize the pressure in the tank (6).
